# EUROPEAN PATENT SPECIFICATION

(11) **EP 3 595 896 B1**
(45) Date of publication and mention of the grant of the patent: **18.09.2024**
(21) Application number: 18715260.8
(22) Date of filing: 15.03.2018
(51) Int. Cl.: B32B 25/04, B32B 27/08, B32B 27/30, B32B 27/32, B32B 27/40, B32B 1/08, F16L 11/20

(54) **FLEXIBLE HOSE**
FLEXIBLER SCHLAUCH
TUYAU FLEXIBLE

(30) Priority: 16.03.2017 IT 201700029512
(43) Date of publication of application: 22.01.2020
(73) Proprietor: De Nora, Paolo, 40033 Casalecchio di Reno (BO) (IT)
(72) Inventor: De Nora, Paolo, 40033 Casalecchio di Reno (BO) (IT)
(74) Representative: Milli, Simone
(86) International application number: PCT/IB2018/051737
(87) International publication number: WO 2018/167705

(56) References cited:
- EP-A1- 2 251 192
- WO-A1-99/15326

## Description

### Technical field

This invention relates to a flexible hose for gardening and other similar applications.

### Background art

The use of flexible hoses for irrigation purposes which have an extendible form during use is currently known in the gardening sector. The requirement of these hoses is that they have a contained length at rest, in such a way that they can be placed in a space of limited size, whilst in use, once connected to a water source, they extend significantly under the effect of the pressure of the water. The elongation can be equal to several times the length of the hose at rest.

According to a prior art embodiment, the extendible hoses comprise an inner tubular element made of elastically extendible material, for example a natural or synthetic rubber, to which is associated an outer tubular element having basically a protective function, for example a sheath made of natural or synthetic fabric. The fabric sheath is usually made in a curled fashion, in such a way as to be able to extend following the extension of the inner elastic element.

In use, under the action of the pressure of the fluid flowing through the hose, the inner tubular element made of elastic material extends in a proportional manner to the pressure. The outer sheath, as well as serving a protective function against external agents, performs the function of containing the expansion of the elastic element, both longitudinally and radially, within the desired limits. This prevents the elastic element, under the action of the pressure of the fluid, from deforming in an uncontrolled and potentially dangerous manner.

The patent applications US 2014/0130930 and WO2014/169057 illustrate extendible hoses of this type. WO 99/15326 A1 discloses a flexible hose construction comprising an inner corrugated hose.

In order to improve the mechanical properties, such as resistance to the pressure of the fluid and to flattening, reinforced flexible hoses have also been made comprising several layers, in which at least one of the layers specifically has a mechanical strength function. The reinforcing layer may, for example, be made of a polymeric material mesh or fabric which surrounds an underlying layer of the hose, and on which, in turn, if necessary, a further outer protective layer is applied.

However, the need is felt, in the sector in question, for providing flexible hoses which, in addition to a high resistance to the pressure of the fluid, also possess a high capacity of extension, in particular at low pressures. There is also a call for the reinforced flexible hoses of the above-mentioned type to have a relatively high weight and dimensions.

### Aim of the invention

The purpose of this invention is to resolve the above-mentioned problems by providing a flexible gardening hose which is able to combine high mechanical strength at high pressures and capacity of extension even at low pressures.

In the context of this purpose, a further aim of this invention is to provide a flexible hose having limited rest weight and dimensions.

Another aim of this invention is to provide a flexible hose which allows a very reduced radius of curvature to be obtained without producing constrictions.

A further aim of this invention is to provide a flexible hose having a simple construction and functional concept, reliable operation, versatile use, as well as being relatively inexpensive.

The above-mentioned aims are achieved, according to this invention, by the flexible hose, according to claim 1.

The flexible hose comprises a first tubular element corrugated in shape in such a way as to have, along a longitudinal section, a series of outer peaks.

The first tubular element is made with a first soft or semi-rigid polymeric material and has a longitudinal axis of extension.

The flexible hose also comprises a second tubular covering element having a first cylindrical surface and a second cylindrical surface. The second tubular element is associated with the outside of the first corrugated tubular element through the second cylindrical surface. The second tubular element is made with a second polymeric material with a low specific weight.

The flexible hose also comprises a third component consisting of a third tubular element having a first cylindrical surface and a second cylindrical surface and a thread-like reinforcing layer. The third component is associated to the outside of the second tubular element through the second cylindrical surface of the third tubular element comprising, at least partly embedded, the thread-like reinforcing layer so as to form a part of the second cylindrical surface. The third tubular element is made with a third polymeric material with a low specific weight. Preferably, the corrugated shape of the first tubular element is obtained by a thermoforming process, by means of blowing or sucking to shape. Preferably, the thread-like reinforcing layer consists of a meshing and/or netting made up of a plurality of wires wound between the second and the third tubular elements.

Preferably, the thread-like reinforcing layer has a step-like trend with knotted crossings close to each other and/or spirals with an opposite orientation or rhombi with acute angles, in such a way as to allow the longitudinal extension of the hose.

The description discloses also a method for making the flexible hose comprising at least the following steps: forming a first tubular element having a longitudinal axis X of extension and obtained with a first soft or semi-rigid polymeric material corrugated in shape in such a way as to have, along a longitudinal section, a series of outer peaks. Associating outside the first tubular corrugated element a second tubular covering element having a first cylindrical outer surface and a second cylindrical inner surface and made using a second polymeric material with a low specific weight. Winding outside the second tubular element a thread-like reinforcement layer, by winding around the first outer surface of the second tubular element. Associating outside the second tubular element and the thread-like reinforcing layer a third tubular element having a first cylindrical outer surface and a second cylindrical inner surface, in such a way as to embed at least partly in the third tubular element and in its second inner surface, the thread-like reinforcing layer so as to form a single third component.

The description discloses also a system for the formation of flexible hoses comprising along a feed line: a first extruding device for forming the first tubular element having a longitudinal axis of extension, parallel to the feed line; a corrugating device for corrugating the first tubular element in such a way as to form, along a longitudinal section, a series of outer peaks; a compacting device for modifying the geometrical configuration of the first tubular corrugated element; a first co-extruding device for forming the second tubular element about the first tubular corrugated element; the first co-extruding device is positioned transversely relative to the feed line; a winding device configured for winding thread-like material about the second tubular element in such a way as to form the thread-like reinforcing layer around the second tubular element; the winding device is positioned transversely relative to the feed line, opposite the first co-extruding device and downstream of the first co-extruding device relative to the feed line; a third co-extruding device for the formation of the third tubular element around the thread-like reinforcing layer and the second tubular element in such a way as to form the third component of the hose.

### Brief description of the drawings

The details of the invention will become more apparent from the detailed description of a preferred embodiment of the flexible hose according to the invention, illustrated by way of example in the accompanying drawings, in which:
Figure 1 shows a perspective view of a portion of the flexible hose according an inactive configuration of the invention;
Figure 2 shows a view partly in cross section of the same portion of the flexible hose;
Figure 3 shows a corresponding view of the portion of the flexible hose in an extended configuration;
Figure 4 shows a view partly in cross section of a portion of the flexible hose according to a second embodiment;
Figures 5 and 6 show, respectively, a perspective view and a view partly in cross section of a third embodiment of the flexible hose according to an inactive configuration;
Figure 7 shows a view of the flexible hose according to Figures 5 and 6 in an extended configuration;
Figures 8 and 9 show, respectively, a perspective view and a view partly in cross section of a fourth embodiment of the flexible hose;
Figures 10 and 11 show, respectively, a view partly in cross section of a fifth and sixth embodiment of the flexible hose;
Figures 12 and 13 show, respectively, a side view and a plan view of a system for making the flexible hose;
Figure 14 illustrates a front view in cross section of an enlarged detail of Figure 2.

### Detailed description of preferred embodiments of the invention

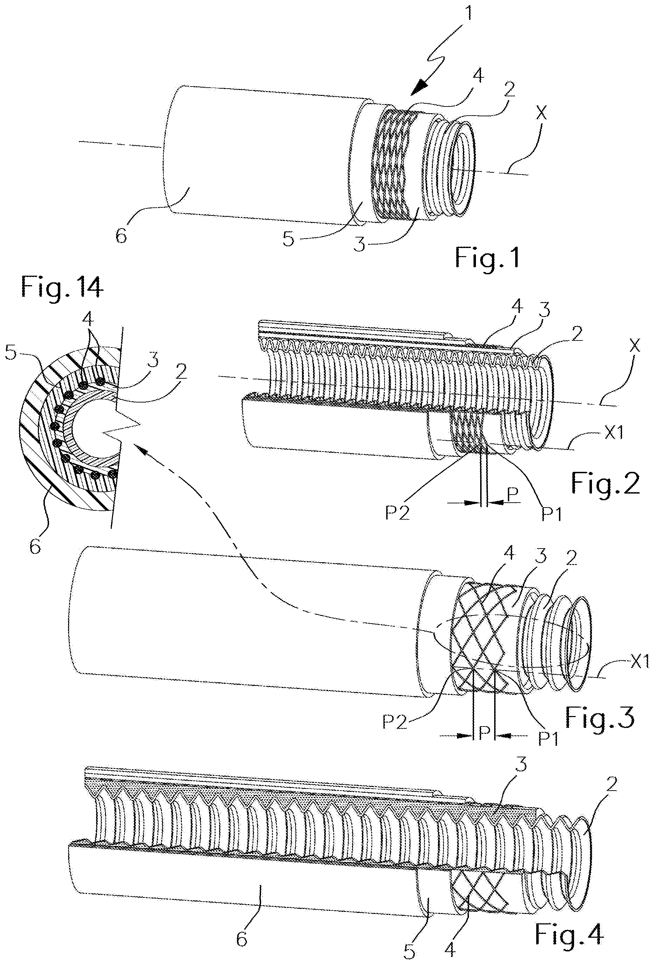

With particular reference to Figures 1, 2 and 3, the numeral 1 denotes in its entirety an extendible hose according to this invention.

The extendible hose 1 comprises a first tubular element 2 corrugated in shape in such a way as to have, along a longitudinal section, a series of outer peaks.

The first tubular element 2 is made with a first soft or semi-rigid polymeric material and has a longitudinal axis of extension X.

The hose 1 also comprises a second tubular covering element 3 having a first cylindrical surface (outer) and a second cylindrical surface (inner) and is associated with the outside of the first tubular corrugated element 2 through the second cylindrical surface.

The second tubular element 3 is made with a second polymeric material with a low specific weight.

The extendible hose 1 also comprises a third component consisting of a third tubular element 5 having a first cylindrical surface (outer) and a second cylindrical surface (inner) and a thread-like reinforcing layer 4. The third component 5, 6 is associated to the outside of the second tubular element 3 through the second cylindrical surface of the third tubular element 5 comprising, at least partly embedded, the thread-like reinforcing layer 4 so as to form a part of the second cylindrical surface.

The third tubular element 5 is made with a third polymeric material with a low specific weight. Preferably, the first tubular element 2 corrugated in shape is made by a process of extrusion of a first polymeric material. Basically, the tubular corrugated element 2 has the shape of a bellows in such a way as to be extendible axially, as well as flexible.

Preferably, the corrugated shape is achieved by a thermoforming process, by means of blowing or sucking to shape. The geometrical characteristics of the bellows can vary during the thermoforming and during machining after and sequential to the thermoforming, in such a way as to modify the degree of elongation of the tubular corrugated element 2.

Usefully, the first polymeric material used for making the tubular corrugated element 2 is of the soft or semi-rigid type. For this purpose, use can be made of polymeric materials such as PP, PE, PET, PVC, PU, rubbers and similar materials. Conveniently, materials are used with a different hardness as a function of the characteristics of the products to be obtained.

As mentioned above, the first tubular corrugated element 2 is associated outside with a second tubular covering element 3 made through a process for over extrusion of a second polymeric material with low specific weight, preferably provided with high flexibility and elongation characteristics. For this purpose, use can be made of polymeric materials such as TPE, TPU, PVC, PUR, SBS, thermoplastic elastomers, rubbers, expanded materials and the like.

Preferably, the second tubular covering element 3 fills, with its second cylindrical surface, at least partly the dips defined alternatively by the outer peaks of the first tubular corrugated element 2.

In the case illustrated, the tubular element 3 defines a surface covering of the tubular corrugated element 2 (see, in particular, Figure 2). However, alternatively, this covering may also fill the outer gaps of the tubular corrugated element 2. In this second case, expanded materials and the like are conveniently used to allow the extension and retraction of the hose. This makes it possible to obtain flexible hoses which are very light and not extendible but which are equipped with a reinforcement that makes the hoses themselves suitable for use with a relatively high operating pressure.

As mentioned previously, the second tubular covering element 3 is associated outside with a third component consisting of a thread-like reinforcing layer 4 and a third tubular element 5 made of a third polymeric material with a low specific weight.

In light of this, the thread-like reinforcing layer 4 is composed of textile type or extruded plastic type wires.

It should also be noted that, the reinforcing layer 4 is partly embedded also in the first surface of the second tubular element 3 (as described in more detail below, see also Figure 14). The thread-like reinforcing layer 4 consists of a meshing and/or netting made up of a plurality of wires wound between the second 3 and the third 5 tubular element.

More specifically, for this purpose extendible materials can be used such as elasticated wires of various hardness or non-extendible materials such as wires or extruded elements or non-extruded elements, simultaneously made of polyester or the like. Preferably, the thread-like reinforcing layer 4 has a step-like trend with knotted crossings close to each other and/or spirals with an opposite orientation or rhombi with acute angles again forming knottings, in such a way as to allow the longitudinal extension of the hose.

The thread-like reinforcing layer 4 performs the function of containing the radial expansion of the first tubular corrugated element 2. If the aim is to obtain a hose which is not extendible, it is sufficient to give the netting an extended spacing which prevents the extension.

The thread-like reinforcing layer 4 is, as mentioned, partly embedded in the third tubular element 5 made of polymeric material with a low specific weight.

The third tubular element 5 embedding partly the thread-like reinforcing layer 4 is made through a process for over extrusion of the third polymeric material with low specific weight, preferably provided with high flexibility and elongation characteristics. For this purpose, use can be made of polymeric materials such as TPE, TPU, PVC, PUR, thermoplastic elastomers, rubbers, expanded materials and the like.

The third tubular element 5 performs the function of granting the structure of the extruded hose characteristics of compactness during retraction and at the same time the desired elongation capacity.

Preferably, the third tubular element 5 has thickness of less than 0.4 mm.

Preferably, the flexible hose 1 comprises a fourth tubular covering element 6 having a first cylindrical surface and a second cylindrical surface and associated on the outside with the third tubular element 5 and made with a polymeric material which can be extended.

The tubular covering element 6 has the purpose of protecting the hose from the external agents, as well as facilitating the sliding on the supporting surfaces. For this purpose, use can be made of polymeric materials such as TPE, TPU, PVC, PUR, thermoplastic elastomers, rubbers and the like. The tubular covering element 6 can have superficially a series of longitudinal protrusions designed to improve the resistance to abrasion and reduce the resistance to sliding on the surfaces during use. The operation of the extendible hose is easily understood from the above description.

Due to the pressure of the fluid flowing inside, the extendible hose may expand axially due to the geometrical and mechanical characteristics of the tubular elements which constitute the layers.

More specifically, the first tubular corrugated element 2 made of extruded soft or semi-rigid material makes it possible to obtain a high degree of elongation of the hose even in the presence of a low pressure of the fluid flowing through it. The particular geometry of the corrugated element, imparted during extrusion, facilitates the longitudinal thrust of the fluid. The second tubular element 3 and the third component formed by the third tubular element 5 and by the thread-like reinforcing layer 4 act in conjunction, on the other hand, to provide the hose with an adequate resistance to the pressure of the fluid. More specifically, the thread-like reinforcing layer 4 makes it possible to contain and modulate the radial and longitudinal expansion of the first tubular element 2 made of soft or semi-rigid material.

More specifically, the making of the thread-like reinforcement layer 4 with a step-lie trend with knotted crossings close to each other and/or spirals with an opposite orientation or rhombi with acute angles allows the longitudinal extension of the hose.

Vice versa, with an arrangement of the meshing weft, that is to say, of the nodes with an extended spacing, a hose may be obtained which is not extendible but with equal technical characteristics, in particular with a very reduced radius of curvature without producing constrictions, reduced weight relative to traditional hoses, high resistance to twisting, easy to handle and practical.

Figure 4 shows the second embodiment of the flexible hose mentioned above, wherein the second tubular covering element 3 fills at least partly the dips defined alternatively by outer peaks of the first tubular corrugated element 2. In this case, the second tubular element 3 may be made of expanded materials and/or materials with low specific weight such as to allow the elongation and retraction of the hose.

Alternatively, the second tubular element 3 may be made of thermoplastic polymeric materials or the like such as to impart to the hose a greater stiffness. In this case, the hose loses at least partly its capacity to elongate but has a high mechanical resistance to pressure.

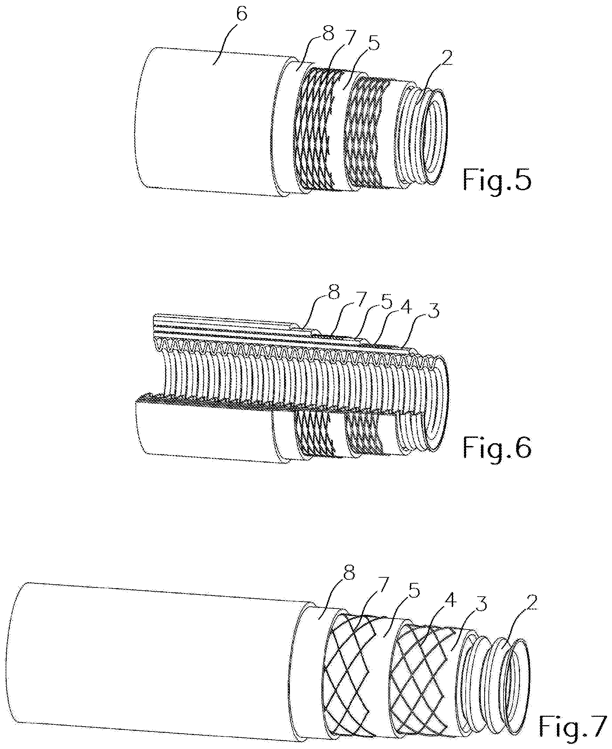

Figures 5, 6 and 7 show a third embodiment of the flexible hose.

According to this embodiment, the flexible hose 1 comprises a further component consisting of a further tubular element 8 having a first cylindrical surface and a second cylindrical surface and a further thread-like reinforcing layer.

This further component 8, 7 is associated outside the third tubular element 5 through the second cylindrical surface of the further tubular element 8 comprising, at least partly embedded, the further thread-like reinforcing layer 7.

It should be noted that the further tubular element 8 is made with a further polymeric material with a low specific weight.

In a similar manner to the first thread-like reinforcement layer 4, the further thread-like reinforcing layer 7 consists of a meshing and/or netting made up of wires or extruded elements and the like.

More specifically, for this purpose extendible materials can be used such as elasticated wires of various hardness or non-extendible materials such as wires or extruded elements or non-extruded elements, simultaneously made of polyester or the like.

Preferably, the further thread-like reinforcing layer 7 has a step-like trend with knotted crossings close to each other and/or spirals with an opposite orientation or rhombi with acute angles, in such a way as to allow the longitudinal extension of the hose.

The further textile reinforcing layer 7 also performs the function of containing the radial expansion of the first tubular corrugated element 2.

The further tubular element 8 of the further component is made through a process for over extrusion of the further polymeric material with low specific weight, preferably provided with high flexibility and elongation characteristics. For this purpose, use can be made of polymeric materials such as TPE, TPU, PVC, PUR, thermoplastic elastomers, rubbers, expanded materials and the like.

The further tubular element 8 gives the structure of the extruded hose further characteristics of compactness during retraction and at the same time further elongation capacity.

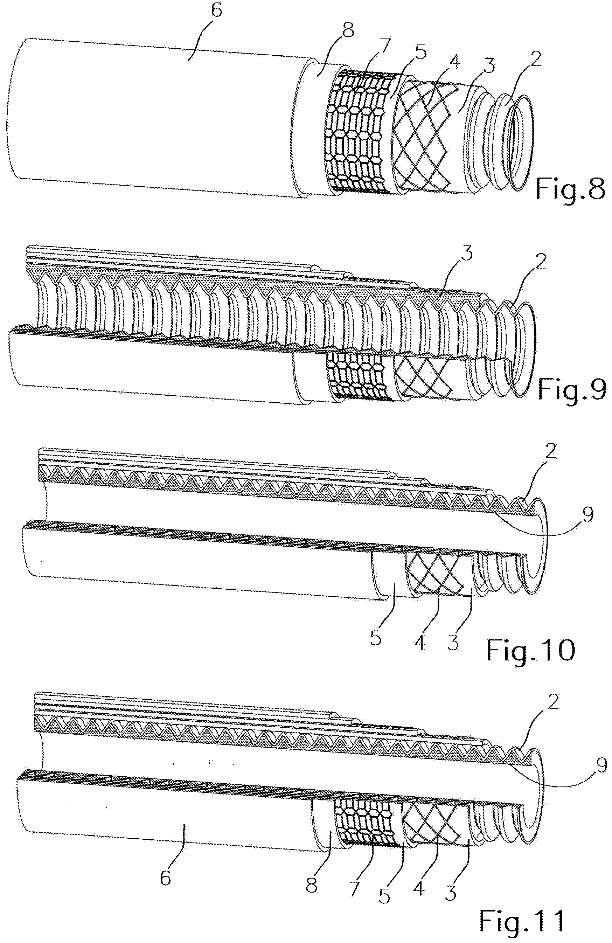

Preferably, the further tubular element 8 has thickness of less than 0.4 mm. Figures 8 and 9 show a fourth embodiment of the flexible hose, which differs from the previous one in that the second tubular covering element 3 fills at least partly the dips defined alternatively by outer peaks of the first tubular corrugated element 2. More specifically, the second tubular element 3 may be made of thermoplastic polymeric materials or the like such as to impart to the hose a greater stiffness. The flexible hose made in this way is not extendible but is provided with considerably lightness.

Figure 10 shows a fifth embodiment of the flexible hose, which differs from the first in that the first tubular corrugated element 2 is associated inside a covering layer 9 which fills at least partly the dips defined alternatively by inner peaks of the first tubular corrugated element 2.

Figure 11 shows a sixth embodiment of the flexible hose, which differs from the previous one in that the third tubular element 5 is associated outside the further tubular element 8 with the further thread-like reinforcing layer 7, as described above.

The inner covering layer 9 performs the function of providing a further seal of the fluid which flows through the hose, as well as making the inner surface of the hose uniform. The flexible hose made in this way is not extendible but is provided with considerable lightness and an increased resistance to pressure.

A method for forming the flexible hose comprises at least the following steps:
- forming a first tubular element 2 having a longitudinal axis X of extension and obtained with a first soft or semi-rigid polymeric material corrugated in shape in such a way as to have, along a longitudinal section, a series of outer peaks;
- associating outside the first tubular corrugated element 2 a second tubular covering element 3 having a first cylindrical outer surface and a second cylindrical inner surface and made using a second polymeric material with a low specific weight;
- winding outside the second tubular element 3 a thread-like reinforcement layer 4, by winding around the first outer surface of the second tubular element 3;
- associating outside the second tubular element 3 and the thread-like reinforcing layer 4 a third tubular element 5 having a first cylindrical outer surface and a second cylindrical inner surface and made of a third polymeric material with a low specific weight, and in such a way as to embed at least partly in the third tubular element 5, in its second inner surface, the thread-like reinforcing layer 4 so as to form a single third component of the hose 1.

Preferably, the method also comprises the following steps, after the step of associating outside the second tubular element 3 and the thread-like reinforcing layer 4 a third tubular element 5:
- cooling the flexible hose 1 obtained;
- pulling the rear end of the flexible hose 1 and cutting the flexible hose 1 to size.

Preferably, after the step of forming the first tubular element 2 there is a step of preparing the first tubular corrugated element 2 in a different geometrical configuration.

It should be noted that the step of associating outside the second tubular element 3 and the thread-like reinforcing layer 4 the third tubular element 5 determines a partial embedding of the thread-like reinforcing layer 4 in the first outer surface of the second tubular element 3.

It should be noted that the step of winding the thread-like reinforcing layer 4 comprises at least crossings or knots of two continuous wires to define the mesh or net which spacing P, along the longitudinal extension of the hose being formed, is defined by two crossings or knot points P1, P2 after or before each other and both falling along an axis X1 parallel to the longitudinal axis X of extension of the first tubular element 2.

In light of this, the step of winding the thread-like reinforcing layer 4 is performed at a winding speed such as to define a winding spacing P as a function at least of the desired final elongation of the hose 1.

More specifically, this method for making the flexible hose 1 as described comprises initially forming, by means of a first extruding device 11 and a successive corrugating device 13, the first tubular element 2 corrugated in shape.

The first tubular element 2 is thermoformed with corrugations by using a first soft or semi-rigid polymeric material such as to have, along a longitudinal section, a series of outer peaks.

More specifically, the spacing between one peak and the other and the height of the peaks determine the coefficient of elongation of the hose, that is, its linear expansion.

A compacting device 14 is used to prepare the first tubular element 2 in a different geometrical configuration (in this case compacted). This is achieved in particular by reducing the feed speed of the first tubular element 2.

In the compacted geometrical form, the cusps of the outer peaks are obviously close together, that is, the spacing between one and the other is reduced.

If, however, very light hoses which are not extendible are to be obtained, the compacting device 14 is not activated.

Associating outside the first tubular element 2, by means of a first co-extruding device 15, the second tubular element 3 made of polymeric material with low specific weight.

Outside the second tubular element 3 is prepared - wound, using a third co-extruding device 16, in particular of the rotary head type, the thread-like reinforcing layer 4.

Alternatively, such thread-like reinforcing layer 4 may be provided by means of a meshing or netting machine.

To the second tubular element 3 is associated outside, by means of a fourth co-extruding device 17, the third tubular element 5 made of polymeric material with low specific weight, in such a way as to embed inside it the thread-like reinforcing layer 4 so as to form the third component of the flexible hose 1.

Lastly, using a fifth co-extruding device 18, the fourth tubular covering element 6 is associated outside the third tubular element 5.

The use of further extruders may be planned if flexible hoses are to be made equipped with a plurality of thread-like reinforcement layers embedded in one or more tubular elements made of polymeric material with low specific weight. More specifically, in order to make the flexible hose provided with a further thread-like reinforcing layer 7 and a further tubular element 8 made of a further polymeric material with low specific weight, as described above, it is possible to duplicate the pair of co-extruding devices which make the thread-like reinforcing layer 4 and the third tubular element 5 made of polymeric material with low specific weight, embedding at least partly the thread-like reinforcing layer 4.

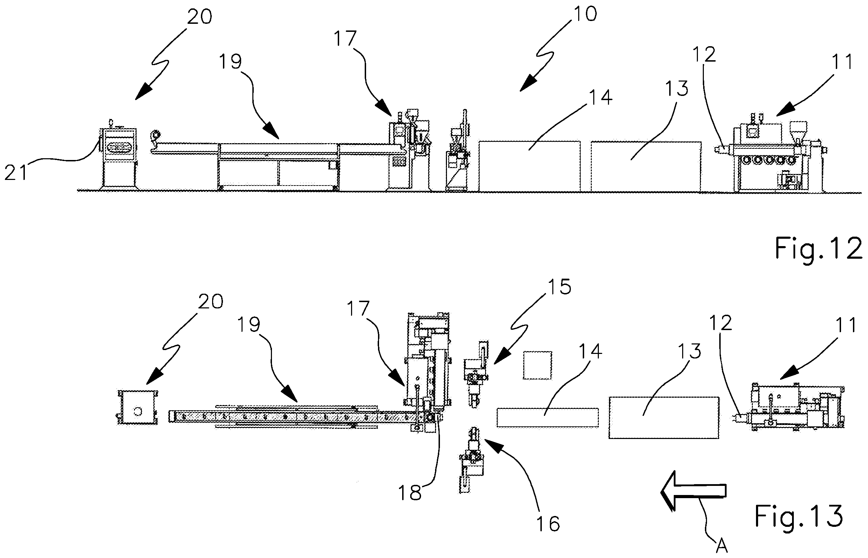

At the outlet from secondary extruding unit, the hose obtained by means of the co-extruding steps described is cooled inside a cooling tank 19. Lastly, the rear of the hose is pulled by a final pulling unit 20. At the final pulling unit 20, a cutting unit 21 cuts the hose to size. With reference to Figures 12 and 13, the numeral 10 denotes in its entirety a system for making the flexible hose.

This system 10 for forming a flexible hose gardening comprises at least, along a feed line A:
- a first extruding device 11 for forming the first tubular element 2 having a longitudinal axis X of extension, parallel to the feed line A;
- a corrugating device 13 for corrugating the first tubular element 2 in such a way as to form, along a longitudinal section, a series of outer peaks;
- a compacting device 14 for modifying the geometrical configuration of the first corrugated tubular element 2;
- a first co-extruding device 15 for forming the second tubular element 3 about the first tubular corrugated element 2; the first co-extruding device 15 being positioned transversely relative to the feed line A;
- a winding device 16 configured for winding thread-like material about the second tubular element 3 in such a way as to form the thread-like reinforcing layer 4 around the second tubular element 3; the winding device 16 being positioned transversally with respect to the feed line A, opposite the first co-extruding device 15 and downstream of the first co-extruding device 15 with respect to the feed line A;
- a third co-extruding device 17 for forming the third tubular element 5 around the thread-like reinforcing layer 4 and the second tubular element 3 in such a way as to form the third component of the hose.

It should be noted that the first extruding device 11 is equipped with an appropriate extrusion head 12 with hose-guide. Downstream of the first extruding device 11 are positioned in line the corrugating device 13 and the compacting device 14. The corrugating device 13 operates with an air process and/or with external vacuum; the compacting device 14 operates with a mechanical drive or by vacuum pump.

Downstream of the compacting device 14 is positioned a secondary extrusion unit comprising the first co-extruding device 15 and the winding device 16, comprising a second co-extruding device 16, which are partly opposite each other in a direction transversal to the feed line A for forming the hose.

To these two devices may be added a third co-extruding device 17 to which is associated a fourth co-extruding device 18.

At the outlet from secondary extruding unit there is a cooling tank 19, downstream of which is located a final pulling unit 20. The final pulling unit 21 is associated with a cutting unit 21.

In the method described above it should be noted that on the first tubular element 2 the spacing formed between one peak and the other and the height of the peaks determine the coefficient of elongation of the hose, that is, the linear expansion.

Moreover, the first tubular element 2 is modified in its geometrical shape preferably in a compacted configuration. This is achieved in particular by reducing the feed speed of the first tubular element 2. In the compacted form, the cusps of the outer peaks are obviously close together, that is, the spacing between one and the other is reduced.

If, however, very light hoses which are not extendible are to be obtained, the compacting device 14 is not activated.

Outside the second tubular element 3 is wound using the third co-extruding device 16, in particular of the rotary head type, the thread-like reinforcing layer 4. Alternatively, such thread-like reinforcing layer 4 may be provided by means of a meshing or netting machine.

To the second tubular element 3 is associated outside, by means of the fourth co-extruding device 17, the third tubular element 5 made of polymeric material with low specific weight, in such a way as to embed at least partly inside it the thread-like reinforcing layer 4.

Lastly, using the fifth co-extruding device 18, the fourth tubular covering element 6 is associated outside the third tubular element 5.

Obviously, the use of further extruders is planned if flexible hoses are to be made equipped with a plurality of thread-like reinforcement layers or textiles embedded at least partly in a corresponding tubular element made of polymeric material with low specific weight. More specifically, in order to make the flexible hose provided with a further thread-like reinforcing layer 7 and a further tubular element 8 made of a further polymeric material with low specific weight, as described above, it is possible to duplicate the pair of co-extruding devices which make the thread-like reinforcing layer 4 and the third tubular element 5 made of polymeric material with low specific weight, embedding at least partly the thread-like reinforcing layer 4.

At the outlet from secondary extruding unit, the hose obtained by means of the co-extruding steps described is cooled inside the cooling tank 19. Lastly, the rear of the hose is pulled by the final pulling unit 20. At the final pulling unit 20, the cutting unit 21 cuts the hose to size.

The flexible hose for gardening according to this invention achieves the above-mentioned aims, that is to say, combining mechanical strength and capacity of extension even at low pressures. This result is obtained basically by the interaction of the various elements of which it is composed in layers, as specified above.

A feature of the invention consists in the fact that, with the same structure of the flexible hose according to the invention, by varying the pitch of the thread-like reinforcing layer or the number of thread-like reinforcing layers superposed and by combining conveniently the technical features of the materials used, it is possible to obtain extendible hoses (or also with reduced extendibility) with different operating pressures and elongation, maintaining a very reduced radius of curvature without producing constrictions, reduced weight compared with traditional hoses and high resistance to torsion.

Further distinctive elements are given by the layer of thread-like reinforcing with a variable - extendible pattern, that is to say, which can be modulated as a function of the type of radial resistance desired and also by the synchronised co-extruding system which allows exact planning of the length by which the hose is to be extended.

Another advantage offered by the flexible hose according to the invention is due to the fact that the presence of layers of expanded materials allows inner insulation relative to the outside temperature.

## Claims

1. A flexible hose for gardening, comprising:
- a first tubular element (2) corrugated in shape in such a way as to have, along a longitudinal section, a series of outer peaks; the first tubular element (2) being made up of a first soft or semi-rigid polymeric material and having a longitudinal axis (X) of extension;
- a second tubular covering element (3) having a first cylindrical surface and a second cylindrical surface and associated on the outside with the first corrugated tubular element (2) through the second cylindrical surface; the second tubular element (3) being made of a second polymeric material with a low specific weight;
- a third component composed of a third tubular element (5) having a first cylindrical surface and a second cylindrical surface and a thread-like reinforcing layer (4); the third component (5, 4) being associated on the outside with the second tubular element (3) through the second cylindrical surface of the third tubular element (5) comprising, at least partly embedded, the thread-like reinforcing layer (4) so as to form a part of the second cylindrical surface; at least the third tubular element (5) being made of a third polymeric material having a low specific weight and wherein the reinforcing layer (4) is partly embedded in the first surface of the second tubular element (3).

2. The flexible hose according to claim 1, wherein the second tubular covering element (3) fills, with its second cylindrical surface, at least partly the dips defined alternatively by the outer peaks of the first tubular corrugated element (2).

3. The flexible hose according to claim 1, wherein the thread-like reinforcing layer (4) is composed of textile type or extruded plastic type wires.

4. The flexible hose according to claim 1 or 2, comprising a further component composed of a further tubular element (8) having a first cylindrical surface and a second cylindrical surface and a further thread-like reinforcing layer (7); the further component (8, 7) being associated on the outside to the third tubular element (5) through the second cylindrical surface of the further tubular element (8) comprising, at least partly embedded, the further thread-like reinforcing layer (7); the further tubular element (8) being made of a further polymeric material having a low specific weight.

5. The flexible hose according to any one of claims 1 or 3 to 4, comprising a covering layer (9) associated between the second surface of the second tubular element (3) and the corrugated surface of the first tubular corrugated element (2) in such a way as to at least partly fill the dips defined alternatively by the inner peaks of the first tubular corrugated element (2).

6. The flexible hose according to any one of the preceding claims, comprising a fourth tubular covering element (6) having a first cylindrical surface and a second cylindrical surface and associated on the outside with the third tubular element (5) and made of a polymeric material which can be extended.

7. The flexible hose according to any one of the preceding claims, wherein the thread-like reinforcing layer (4) is composed of a meshing and/or netting made up of a plurality of wires wound between the second (3) and the third (5) tubular element.

8. A method for making a flexible hose according to one of the preceding claims, **characterised in that** it comprises at least the following steps:
a. forming a first tubular element (2) having a longitudinal axis (X) of extension and obtained with a first soft or semi-rigid polymeric material corrugated in shape in such a way as to have, along a longitudinal section, a series of outer peaks;
b. associating outside the first tubular corrugated element (2) a second tubular covering element (3) having a first cylindrical outer surface and a second cylindrical inner surface and made using a second polymeric material with a low specific weight;
c. winding outside the second tubular element (3) a thread-like reinforcement layer (4), by winding around the first outer surface of the second tubular element (3);
d. associating outside the second tubular element (3) and the thread-like reinforcing layer (4) a third tubular element (5) having a first cylindrical outer surface and a second cylindrical inner surface and made of a third polymeric material with a low specific weight, and in such a way as to embed at least partly in the third tubular element (5), in its second inner surface, the thread-like reinforcing layer (4) so as to form a single third component.

9. The method according to claim 8, also comprising the following steps, after the step of associating outside the second tubular element (3) and the thread-like reinforcing layer (4) a third tubular element (5):
e. cooling the flexible hose by means of the co-extrusion steps;
f. pulling the rear end of the flexible hose and cutting the hose to size.

10. The method according to claim 8 or 9, wherein, after the step of forming the first tubular element (2) there is a step of preparing the first tubular corrugated element (2) in a different geometrical configuration.

11. The method according to claim 8 or 10, wherein the step of associating outside the second tubular element (3) and the thread-like reinforcing layer (4) a third tubular element (5) determines a partial embedding of the thread-like reinforcing layer (4) in the first outer surface of the second tubular element (3).

12. The method according to any one of claims 8 to 11, wherein the step of winding the thread-like reinforcing layer (4) comprises at least crossings or knots of two continuous wires to define the mesh or net which spacing (P), along the longitudinal extension of the hose being formed, is defined by two crossings or knot points (P1, P2) after or before each other and both falling along an axis (X1) parallel to the longitudinal axis (X) of extension of the first tubular element (2).

13. The method according to claim 12, wherein the step of winding the thread-like reinforcing layer (4) around the second tubular element (3) is performed at a winding speed such as to define a winding spacing as a function at least of the desired final elongation of the hose.

## Patentansprüche

1. Flexibler Gartenschlauch, umfassend:
- ein erstes rohrförmiges Element (2), das eine gewellte Form aufweist, sodass entlang eines Längsschnitts eine Reihe von äußeren Spitzen vorhanden ist, wobei das erste rohrförmige Element (2) aus einem ersten weichen oder halb starren Polymermaterial ausgebildet ist und eine Längsausdehnungsachse (X) aufweist;
- ein zweites rohrförmiges Abdeckelement (3), das eine erste zylindrische Oberfläche und eine zweite zylindrische Oberfläche aufweist und auf der Außenseite mit dem ersten rohrförmigen Wellelement (2) durch die zweite zylindrische Oberfläche assoziiert ist, wobei das zweite rohrförmige Element (3) aus einem zweiten Polymermaterial mit einem geringen spezifischen Gewicht ausgebildet ist;
- eine dritte Komponente, die aus einem dritten rohrförmigen Element (5) besteht, aufweisend eine erste zylindrische Oberfläche und eine zweite zylindrische Oberfläche und eine gewindeartige Verstärkungsschicht (4), wobei die dritte Komponente (5, 4) auf der Außenseite mit dem zweiten rohrförmigen Element (3) durch die zweite zylindrische Oberfläche des dritten rohrförmigen Elements (5) assoziiert ist, umfassend zumindest eingebettet die gewindeartige Verstärkungsschicht (4), sodass ein Teil der zweiten zylindrischen Oberfläche geformt wird, wobei zumindest das dritte rohrförmige Element (5) aus einem dritten Polymermaterial ausgebildet ist, aufweisend ein geringes spezifisches Gewicht, und wobei die Verstärkungsschicht (4) teilweise in die erste Oberfläche des zweiten rohrförmigen Elements (3) eingebettet ist.

2. Flexibler Schlauch nach Anspruch 1, wobei das zweite rohrförmige Abdeckelement (3) mit seiner zweiten zylindrischen Oberfläche zumindest teilweise die Senkungen füllt, die abwechselnd durch die äußeren Spitzen des ersten rohrförmigen Wellelements (2) definiert sind.

3. Flexibler Schlauch nach Anspruch 1, wobei die gewindeartige Verstärkungsschicht (4) aus textilartigen Drähten oder solchen vom extrudierten Kunststofftyp besteht.

4. Flexibler Schlauch nach Anspruch 1 oder 2, umfassend eine weitere Komponente, die aus einem weiteren rohrförmigen Element (8) besteht, aufweisend eine erste zylindrische Oberfläche und eine zweite zylindrische Oberfläche und eine weitere gewindeartige Verstärkungsschicht (7), wobei die weitere Komponente (8, 7) auf der Außenseite mit dem dritten rohrförmigen Element (5) durch die zweite zylindrische Oberfläche des weiteren rohrförmigen Elements (8) assoziiert ist, umfassend zumindest teilweise eingebettet die weitere gewindeartige Verstärkungsschicht (7), wobei das weitere rohrförmige Element (8) aus einem weitere Polymermaterial ausgebildet ist, aufweisend ein geringes spezifisches Gewicht.

5. Flexibler Schlauch nach einem der Ansprüche 1 oder 3 bis 4, umfassend eine Deckschicht (9), die zwischen der zweiten Oberfläche des zweiten rohrförmigen Elements (3) und der gewellten Oberfläche des ersten rohrförmigen Wellelements (2) assoziiert ist, sodass sie zumindest teilweise die Senkungen füllt, die abwechselnd durch die inneren Spitzen des rohrförmigen Wellelements (2) definiert sind.

6. Flexibler Schlauch nach einem der vorhergehenden Ansprüche, umfassend ein viertes rohrförmiges Abdeckelement (6), aufweisend eine erste zylindrische Oberfläche und eine zweite zylindrische Oberfläche, und assoziiert auf der Außenseite mit dem dritten rohrförmigen Element (5) und ausgebildet aus einem Polymermaterial, das gedehnt werden kann.

7. Flexibler Schlauch nach einem der vorhergehenden Ansprüche, wobei die gewindeartige Verstärkungsschicht (4) aus einer Vermaschung und/oder Vernetzung besteht, die aus einer Vielzahl von Drähten ausgebildet ist, die zwischen das zweite (3) und das dritte (5) rohrförmige Element gewunden sind.

8. Verfahren zur Herstellung eines flexiblen Schlauchs nach einem der vorhergehenden Ansprüche, **dadurch gekennzeichnet, dass** es zumindest die folgenden Schritte umfasst:
a. Formen eines ersten rohrförmigen Elements (2), aufweisend eine Längsausdehnungsachse (X) und erhalten mit einem ersten weichen oder halb starren Polymermaterial, das eine gewellte Form aufweist, sodass entlang eines Längsschnitts eine Reihe von äußeren Spitzen vorhanden ist;
b. Assoziieren außerhalb des ersten rohrförmigen Wellelements (2) ein zweites rohrförmiges Abdeckelement (3), aufweisend eine erste zylindrische äußere Oberfläche und eine zweite zylindrische innere Oberfläche, und ausgebildet unter Nutzung eines zweiten Polymermaterials mit einem geringen spezifischen Gewicht;
c. Wickeln außerhalb des zweiten rohrförmigen Elements (3) einer gewindeartigen Verstärkungsschicht (4) durch Wickeln rund um die erste äußere Oberfläche des zweiten rohrförmigen Elements (3);
d. Assoziieren außerhalb des zweiten rohrförmigen Elements (3) und der gewindeartigen Verstärkungsschicht (4) ein drittes rohrförmiges Element (5), aufweisend eine erste zylindrische äußere Oberfläche und eine zweite zylindrische innere Oberfläche, und ausgebildet aus einem dritten Polymermaterial mit einem geringen spezifischen Gewicht, und sodass die gewindeartige Verstärkungsschicht (4) zumindest teilweise in das dritte rohrförmige Element (5) in deren zweite innere Oberfläche eingebettet ist, sodass eine einzelne dritte Komponente geformt wird.

9. Verfahren nach Anspruch 8, zudem umfassend die folgenden Schritte nach dem Schritt des Assoziierens eines dritten rohrförmigen Elements (5) außerhalb des zweiten rohrförmigen Elements (3) und der gewindeartigen Verstärkungsschicht (4):
e. Kühlen des flexiblen Schlauchs mittels der Koextrusionsschritte;
f. Ziehen des hinteren Endes des flexiblen Schlauchs und Zuschneiden des Schlauchs.

10. Verfahren nach Anspruch 8 oder 9, wobei nach dem Schritt zum Formen des ersten rohrförmigen Elements (2) ein Schritt zum Vorbereiten des ersten rohrförmigen Wellelements (2) in einer unterschiedlichen geometrischen Konfiguration stattfindet.

11. Verfahren nach Anspruch 8 oder 10, wobei der Schritt zum Assoziieren eines dritten rohrförmigen Elements (5) außerhalb des zweiten rohrförmigen Elements (3) und der gewindeartigen Verstärkungsschicht (4) ein teilweises Einbetten der gewindeartigen Verstärkungsschicht (4) in die erste äußere Oberfläche des zweiten rohrförmigen Elements (3) bestimmt.

12. Verfahren nach einem der Ansprüche 8 bis 11, wobei der Schritt zum Wickeln der gewindeartigen Verstärkungsschicht (4) zumindest das Überkreuzen oder Verknoten von zwei durchgehenden Drähten umfasst, um das Maschengewebe oder Netz zu definieren, dessen Beabstandung (P) entlang der Längsausdehnung des geformten Schlauchs durch zwei Überkreuzungs- oder Knotenpunkte (P1, P2) nach- oder voreinander definiert ist, die beide entlang einer Achse (X1) fallen, die parallel zur Längsausdehnungsachse (X) des ersten rohrförmigen Elements (2) verläuft.

13. Verfahren nach Anspruch 12, wobei der Schritt zum Wickeln der gewindeartigen Verstärkungsschicht (4) rund um das zweite rohrförmige Element (3) bei einer Wickelgeschwindigkeit durchgeführt wird, sodass eine Wicklungsbeabstandung als eine Funktion von mindestens der gewünschten abschließenden Verlängerung des Schlauchs definiert wird.

## Revendications

1. Tuyau flexible pour jardinage, comprenant :
- un premier élément tubulaire (2) de forme ondulée de manière à avoir, le long d'une section longitudinale, une série de pics extérieurs ; le premier élément tubulaire (2) étant fait d'un premier matériau polymère mou ou semi-rigide et ayant un axe longitudinal (X) d'extension ;
- un deuxième élément de revêtement tubulaire (3) ayant une première surface cylindrique et une deuxième surface cylindrique et associé à l'extérieur au premier élément tubulaire ondulé (2) à travers la deuxième surface cylindrique ; le deuxième élément tubulaire (3) étant fait d'un deuxième matériau polymère avec un faible poids spécifique ;
- un troisième composant composé d'un troisième élément tubulaire (5) ayant une première surface cylindrique et une deuxième surface cylindrique et une couche de renforcement filiforme (4) ; le troisième composant (5, 4) étant associé à l'extérieur au deuxième élément tubulaire (3) à travers la deuxième surface cylindrique du troisième élément tubulaire (5) comprenant, au moins partiellement intégrée, la couche de renforcement filiforme (4) de manière à former une partie de la deuxième surface cylindrique ; au moins le troisième élément tubulaire (5) étant fait d'un troisième matériau polymère ayant un faible poids spécifique et dans lequel la couche de renforcement (4) est partiellement intégrée dans la première surface du deuxième élément tubulaire (3) .

2. Tuyau flexible selon la revendication 1, dans lequel le second élément de recouvrement tubulaire (3) remplit, avec sa seconde surface cylindrique, au moins partiellement les creux définis alternativement par les pics extérieurs du premier élément tubulaire ondulé (2).

3. Tuyau flexible selon la revendication 1, dans lequel la couche de renforcement filiforme (4) est composée de fils de type textile ou de type plastique extrudé.

4. Tuyau flexible selon la revendication 1 ou 2, comprenant un autre composant composé d'un autre élément tubulaire (8) ayant une première surface cylindrique et une deuxième surface cylindrique et une autre couche de renforcement filiforme (7) ; l'autre composant (8, 7) étant associé à l'extérieur au troisième élément tubulaire (5) à travers la deuxième surface cylindrique de l'autre élément tubulaire (8) comprenant, au moins partiellement intégrée, l'autre couche de renforcement filiforme (7) ; l'autre élément tubulaire (8) étant fait d'un autre matériau polymère ayant un faible poids spécifique.

5. Tuyau flexible selon l'une quelconque des revendications 1 ou 3 à 4, comprenant une couche de recouvrement (9) associée entre la deuxième surface du deuxième élément tubulaire (3) et la surface ondulée du premier élément tubulaire ondulé (2) de manière à remplir au moins partiellement les creux définis alternativement par les pics internes du premier élément tubulaire ondulé (2) .

6. Tuyau flexible selon l'une quelconque des revendications précédentes, comprenant un quatrième élément de recouvrement tubulaire (6) ayant une première surface cylindrique et une deuxième surface cylindrique et associé à l'extérieur au troisième élément tubulaire (5) et fait d'un matériau polymère qui peut être étendu.

7. Tuyau flexible selon l'une quelconque des revendications précédentes, dans lequel la couche de renforcement filiforme (4) est composée d'un maillage et/ou d'un filet constitué d'une pluralité de fils enroulés entre le deuxième (3) et le troisième (5) élément tubulaire.

8. Procédé de fabrication d'un tuyau flexible selon l'une quelconque des revendications précédentes, **caractérisé en ce qu'**il comprend au moins les étapes suivantes :
a. former un premier élément tubulaire (2) ayant un axe longitudinal (X) d'extension et obtenu avec un premier matériau polymère mou ou semi-rigide de forme ondulée de manière à avoir, le long d'une section longitudinale, une série de pics extérieurs ;
b. associer à l'extérieur du premier élément tubulaire ondulé (2) un second élément de recouvrement tubulaire (3) ayant une première surface extérieure cylindrique et une seconde surface intérieure cylindrique et fabriqué à l'aide d'un second matériau polymère avec un faible poids spécifique ;
c. enrouler à l'extérieur du deuxième élément tubulaire (3) une couche de renforcement filiforme (4), en enroulant autour de la première surface extérieure du deuxième élément tubulaire (3) ;
d. associer à l'extérieur du deuxième élément tubulaire (3) et de la couche de renforcement filiforme (4) un troisième élément tubulaire (5) ayant une première surface extérieure cylindrique et une deuxième surface intérieure cylindrique et constitué d'un troisième matériau polymère avec un faible poids spécifique, et de manière à intégrer au moins partiellement dans le troisième élément tubulaire (5), dans sa deuxième surface intérieure, la couche de renforcement filiforme (4) de manière à former un seul troisième composant.

9. Procédé selon la revendication 8, comprenant également les étapes suivantes, après l'étape d'associer à l'extérieur du deuxième élément tubulaire (3) et de la couche de renforcement filiforme (4) un troisième élément tubulaire (5) :
e. refroidir le tuyau flexible au moyen des étapes de coextrusion ;
f. tirer sur l'extrémité arrière du tuyau flexible et couper le tuyau à la taille voulue.

10. Procédé selon la revendication 8 ou 9, dans lequel, après l'étape de former le premier élément tubulaire (2), il y a une étape de préparer le premier élément tubulaire ondulé (2) dans une configuration géométrique différente.

11. Procédé selon la revendication 8 ou 10, dans lequel l'étape d'associer à l'extérieur du deuxième élément tubulaire (3) et de la couche de renforcement filiforme (4) un troisième élément tubulaire (5) détermine une intégration partielle de la couche de renforcement filiforme (4) dans la première surface extérieure du deuxième élément tubulaire (3).

12. Procédé selon l'une quelconque des revendications 8 à 11, dans lequel l'étape d'enrouler la couche de renforcement filiforme (4) comprend au moins des croisements ou des noeuds de deux fils continus pour définir la maille ou le filet, lequel espacement (P), le long de l'extension longitudinale du tuyau en cours de formation, est défini par deux croisements ou points de noeud (P1, P2) l'un après l'autre ou devant l'autre et les deux tombant le long d'un axe (X1) parallèle à l'axe longitudinal (X) d'extension du premier élément tubulaire (2).

13. Procédé selon la revendication 12, dans lequel l'étape d'enrouler la couche de renforcement filiforme (4) autour du second élément tubulaire (3) est effectuée à une vitesse d'enroulement de manière à définir un espacement d'enroulement en fonction au moins de l'allongement final souhaité du tuyau.
